# EUROPÄISCHE PATENTANMELDUNG

(11) **EP 3 595 405 A1**
(43) Veröffentlichungstag der Anmeldung: **15.01.2020**
(21) Anmeldenummer: 18000969.8
(22) Anmeldetag: 14.12.2018
(51) Int. Cl.: H05B 3/28, G03B 17/55

(54) **HERSTELLUNGSVERFAHREN EINER HEIZFLÄCHE**

(30) Priorität: 14.07.2018 DE 102018005558
(71) Anmelder: K.L. Kaschier- und Laminier GmbH, 48455 Bad Bentheim-Gildehaus (DE)
(72) Erfinder: Schulze Wehninck, Rembert, 82327 Tutzing (DE); Gilke, Wolfram, 70195 Stuttgart (DE)
(74) Vertreter: Cohausz Hannig Borkowski Wißgott

(57) **Zusammenfassung**

Die Erfindung betrifft ein Verfahren zum Herstellen einer Heizfläche mit einem flachen, elektrische Kontaktierungspunkte aufweisenden Heizelement, wobei das Heizelement zumindest einseitig vollflächig von einer Kunststoffschicht umspritzt wird.

## Beschreibung

Die Erfindung betrifft ein Verfahren zum Herstellen einer Heizfläche mit einem flachen, elektrische Kontaktierungspunkte aufweisenden Heizelement.

Heizflächen werden für die unterschiedlichsten Zwecke eingesetzt. So muss bei vielen technischen Anwendungen bei schlechten Umgebungsbedingungen ein fehlerfreies Funktionieren gewährleistet sein.

Aufgabe der Erfindung ist es, die Herstellung einer ein Heizelement aufweisenden Heizfläche zu vereinfachen und hierbei eine fehlerfreie Funktion zu gewährleisten und die Herstellungskosten zu verringern.

Diese Aufgabe wird erfindungsgemäß dadurch gelöst, dass das Heizelement zumindest einseitig vollflächig von einer Kunststoffschicht umspritzt wird.

Hierbei sind die Kontaktierungsstellen des Heizelementes von der Kunststoffschicht (3) ebenfalls umspritzt oder liegen frei.

Ferner wird vorgeschlagen,
- dass im Kunststoffspritzguss zuerst die das Heizelement bedeckende erste Kunststoffschicht einschließlich der daran liegenden Heizelementenschicht hergestellt wird,
- dass zugleich oder danach eine das Heizelement bedeckende zweite Kunststoffschicht an die noch freie Seite der Heizelementenschicht angespritzt wird, und
- dass hierbei die Kontaktierungspunkte von der ersten und/oder zweiten Kunststoffschicht umspritzt sind.

Eine solche Lösung hat u.a. folgende Vorteile:
- Die Heizfläche ist besonders einfach und kostengünstig zu produzieren.
- Die Heizfolie ist vor schädlichen Umwelteinflüssen, wie z. B. Feuchtigkeit und Sonneneinstrahlung geschützt.
- Das Herstellen der Streulichtblende erfolgt mit dem Heizelement in einem einfachen Spritzgussverfahren.
- Die Kontaktierungspunkte sind sicher geschützt.

Besonders vorteilhaft ist es, wenn die Herstellung im Zweikomponenten-Kunststoffspritzguss erfolgt.

Vorzugsweise wird vorgeschlagen, dass das flache Heizelement von einer Heizfolie gebildet ist, die eine elektrisch leitende Beschichtung und/oder leitende Bahnen aufweist.

Auch wird vorgeschlagen, dass die stromführenden Kabel an den Kontaktierungsstellen mechanisch insbesondere durch Crimpen oder Aufnähen mit leitfähigem Garn befestigt sind oder dass die stromführenden Kabel an den Kontaktierungsstellen durch Widerstandsschweißen, Ultraschallschweißen oder Löten befestigt sind.

Besonders vorteilhaft ist das Verfahren verwendbar bei einer Streulichtblende eines auf der Innenseite einer Kraftfahrzeugscheibe angeordneten Bilderfassungsgerätes, wobei im Boden der Streulichtblende das flache Heizelement angeordnet ist, dessen Seitenflächen parallel zur Ober- und/oder Unterseite des Bodens sind.

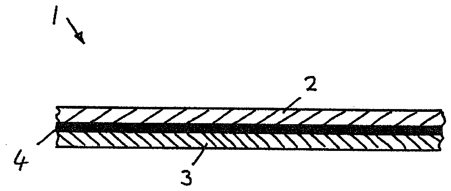

Ein Ausführungsbeispiel der Erfindung ist in der Zeichnung in einem Querschnitt schematisch dargestellt und wird im Folgenden näher beschrieben.

Die Heizfläche 1 besteht aus mindestens drei Schichten, einer oberen Kunststoffschicht 2, einer unteren Kunststoffschicht 3 und einer zwischen diesen zwei Schichten angeordneten Wärme erzeugenden Schicht aus einem flachen Heizelement 4. Die beiden Kunststoffschichten bestehen vorzugsweise aus einem polymeren Kunststoff.

In einer nicht dargestellten Alternative fehlt die obere Kunststoffschicht 2, wobei auf der entsprechend freien Seite des Heizelements die Kontaktierungspunkte frei d. h. unbedeckt liegen.

Die Heizfläche 1 mit ihrem Heizelement 4 wird im Zweikomponenten-Kunststoff-Spritzgussverfahren in einem Arbeitsgang hergestellt, wobei vor dem Einspritzen des Kunststoffs in die Spritzgussform das flache Heizelement 4 eingelegt wird, um danach auf einer Seite des Heizelements eine erste Kunststoffschicht 3 anzuspritzen. Vorzugsweise wird danach oder zugleich im selben Spritzwerkzeug eine das Heizelement 4 bedeckende Kunststoffschicht 2 auf die freie Seite des Heizelements 4 angespritzt.

Das flache Heizelement 4 kann unterschiedlich aufgebaut sein. Vorzugsweise ist es von einer Heizfolie gebildet, die eine elektrisch leitende Beschichtung und/oder leitende Bahnen aufweist.

Das Heizelement weist zwei elektrische, metallene Kontaktierungspunkte (Kontaktstellen) auf, die von der ersten und/oder zweiten Kunststoffschicht 2, 3 umspritzt sind oder bei nur einer Kunststoffschicht auf der nicht mit Kunststoff bedeckten Seitenfläche der Heizfläche frei liegen. Hierbei können die zwei Kontaktierungspunkte Erhebungen an der Heizfläche 1 bilden mit blanken Außenflächen als Kontaktflächen.

Zum Befestigen der stromführenden Kabel an den Kontaktierungsstellen des Heizelements 4 werden mechanische Verfahren wie Crimpen oder Aufnähen mit leitfähigem Garn verwendet. Alternativ werden die Kabelenden an das Heizelement aufgeschweißt, vorzugsweise durch Widerstandsschweißen oder durch Ultraschallschweißen. Eine Befestigung kann aber auch durch Löten erfolgen.

Vorteilhaft ist das erfindungsgemäße Verfahren bei der Streulichtblende eines Bilderfassungsgerätes verwendbar. Hierbei ist auf der Innenfläche einer Kfz-Scheibe insbesondere einer Windschutzscheibe ein Bilderfassungsgerät befestigt, das vor und unterhalb des Objektivs mindestens einer Kamera eine Streulichtblende aufweist, die dafür sorgt, dass möglichst wenig Streulicht zum Objektiv gelangt.

## Patentansprüche

1. Verfahren zum Herstellen einer Heizfläche mit einem flachen, elektrische Kontaktierungspunkte aufweisenden Heizelement (4), **dadurch gekennzeichnet, dass** das Heizelement (4) zumindest einseitig vollflächig von einer Kunststoffschicht (3) umspritzt wird.

2. Verfahren nach Anspruch **1,dadurch gekennzeichnet, dass** die Kontaktierungsstellen des Heizelementes von der Kunststoffschicht (3) ebenfalls umspritzt werden oder frei liegen.

3. Verfahren nach Anspruch 1 oder 2, **dadurch gekennzeichnet,**
- **dass** im Kunststoffspritzguss zuerst die das Heizelement (4) bedeckende erste Kunststoffschicht (3) einschließlich der daran liegenden Heizelementenschicht hergestellt wird,
- **dass** zugleich oder danach eine das Heizelement (4) bedeckende zweite Kunststoffschicht (2) an die noch freie Seite der Heizelementenschicht angespritzt wird.

4. Verfahren nach Anspruch 3, **dadurch gekennzeichnet, dass** die Kontaktierungspunkte von der ersten und/oder zweiten Kunststoffschicht (2, 3) umspritzt sind.

5. Verfahren nach einem der vorherigen Ansprüche, **dadurch gekennzeichnet, dass** die Herstellung im Zweikomponenten-Kunststoffspritzguss erfolgt.

6. Verfahren nach einem der vorherigen Ansprüche, **dadurch gekennzeichnet, dass** das flache Heizelement (4) von einer Heizfolie gebildet ist, die eine elektrisch leitende Beschichtung und/oder leitende Bahnen aufweist.

7. Verfahren nach einem der vorherigen Ansprüche, **dadurch gekennzeichnet, dass** die stromführenden Kabel an den Kontaktierungsstellen mechanisch insbesondere durch Crimpen oder Aufnähen mit leitfähigem Garn befestigt sind.

8. Verfahren nach einem der vorherigen Ansprüche, **dadurch gekennzeichnet, dass** die stromführenden Kabel an den Kontaktierungsstellen durch Widerstandsschweißen, Ultraschallschweißen oder Löten befestigt sind.

9. Verwendung des Verfahrens nach einem der vorherigen Ansprüche bei einer Streulichtblende eines auf der Innenseite einer Kraftfahrzeugscheibe angeordneten Bilderfassungsgerätes, wobei im Boden der Streulichtblende das flache Heizelement (4) angeordnet ist, dessen Seitenflächen parallel zur Ober- und/oder Unterseite des Bodens sind.
